Europäisches Patentamt

European Patent Office

Office européen des brevets

(19)

(11) Numéro de publication: **0 130 440**
**A1**

(12) ## DEMANDE DE BREVET EUROPEEN

(21) Numéro de dépôt: **84106864.6**

(22) Date de dépôt: **15.06.84**

(51) Int. Cl.⁴: **B 05 D 5/06**

---

(30) Priorité: **29.06.83 LU 84885**

(71) Demandeur: **EUROFLOOR S.A., Rue Neuve, L-9501 Wiltz (LU)**

(72) Inventeur: **Duforest, René, 11 rue du Bois Joli, Montcy Notre Dame (FR)**
Inventeur: **Roussel, Albert, 47 rue des Charretiers, Wiltz (LU)**

(43) Date de publication de la demande: **09.01.85 Bulletin 85/2**

(84) Etats contractants désignés: **AT CH DE GB IT LI NL SE**

(74) Mandataire: **Meyers, Ernest et al, c/o FREYLINGER & ASSOCIES Postfach 1153, 46 rue du Cimetière, Luxemburg (LU)**

---

(54) **Procédé de fabrication de revêtements décoratifs sur un support, installation à cet effet et produits obtenus.**

(57) Procédé de fabrication de revêtements synthétiques de décoration destinés notamment aux sols et aux murs, dans lequel on dépose selon un motif ou décor, des poudres sur un support, sans qu'il y ait contact entre le moyen d'application et la poudre et le support, au moins l'une des poudres déposées contenant des particules fusibles, en vue de fixer le décor obtenu.

L'invention concerne également les produits obtenus par ce procédé ainsi qu'une installation de fabrication destinée à la mise en œuvre dudit procédé.

1

PROCEDE DE FABRICATION DE REVETEMENTS DECORATIFS SUR UN SUPPORT,

INSTALLATION A CET EFFET ET PRODUITS OBTENUS

La présente invention concerne un procédé de fabrication d'un revêtement décoratif sur un support et elle s'étend à une installation prévue pour la mise en oeuvre de ce procédé ainsi qu'aux produits obtenus.

La production de dépôts ou de décors sur un support quelconque, en particulier sur un support rigide qui est la forme d'exécution principalement envisagée par la Demanderesse, présente l'inconvénient de ne permettre la réalisation en continu qu'avec de nombreuses difficultés, en particulier si l'on envisage de déposer plusieurs couches successives d'un élément de décor.

Dans divers procédés, tels que les émaillages décoratifs sur métaux la réalisation de décors sur différentes matières céramiques, etc... il est habituel d'appliquer les différentes couches ou strates de décoration (qui sont habituellement de différentes couleurs) en des étapes séparées avec interposition entre les différentes étapes d'un traitement (généralement thermique) de séchage, de fixation ou de fusion.

On conçoit que ces procédés sont lents et souvent onéreux en énergie et en main d'oeuvre.

La présente invention vise à fournir un procédé et une installation qui permet de pallier les inconvénients précités.

Le procédé et l'installation de l'invention peuvent être appliqués à un support quelconque. A titre d'illustration, on peut citer un élément métallique dans le cas où l'on veut réaliser des décors par la technique des émaux, ou encore un élément de forme généralement plate en une matière céramique quelconque que l'on veut décorer.

La présente invention vise par conséquent à fournir un procédé permettant de réaliser des revêtements décoratifs d'aspect principalement similaire à la céramique et à des revêtements émaillés, sans être cependant limité à ces applications particulières, par un procédé permettant la production rapide, en continu, pouvant comporter l'application successive de diverses couches ou strates décoratives, sans nécessiter de séchage ou de fixation après application de chacune de ces couches.

Le but de la présente invention est atteint par un procédé caractérisé en ce qu'on dépose sur un support, selon un motif ou décor, au moins une poudre sans qu'il y ait contact entre le moyen d'application de la poudre et le support, au moins l'une des poudres déposées subissant une fixation par tout moyen approprié. Il doit être bien entendu que le procédé de l'invention présente un intérêt majeur dans le cas où plusieurs types de poudres différents (en particulier des poudres de granulométrie, de coloration, et de comportement différents) sont appliquées successivement, l'absence de contact entre le moyen d'application de la poudre et le support permettant des dépôts successifs contrôlés sans nécessiter d'opération de séchage ou de fixation intermédiaire.

La technique décrite s'applique aussi bien à des produits du type "émail" réagissant par voie thermique qu'à des produits se transformant par voie chimique (chaux, ciment, plâtre, ...)

En effet, les poudres déposées peuvent être largement de nature quelconque, à savoir minérale, organique et totalement, partiellement ou non fusible à la température de travail ultérieure.

Les poudres peuvent être fusibles ou susceptibles d'être soumises à une réaction chimique. A titre d'exemple d'une poudre pouvant réagir par fixation chimique, on peut se référer à un ciment. Le support utilisé peut être inerte ou réactionnel et , notamment dans le cas où la poudre utilisée est un ciment, on peut envisager le dépôt de celui-ci sur un support quelconque humidifié. Dans ce cas, la poudre de ciment au contact de l'eau pourra se lier au support par réaction chimique.

3

Un support particulièrement adéquat dans ce mode d'éxécution est l'amiante ou l'amiante-ciment, qui pourra être décoré avec des poudres de ciment diversement colorées.

En variante, il est possible, après avoir déposé la ou les poudres selon un décor, de fixer celui-ci par une opération chimique en appliquant par une technique quelconque, notamment par pulvérisation, un second réactif sur la surface, totale ou partielle, du support décoré. Dans le cas où la poudre appliquée est un ciment, on peut pulvériser ou vaporiser de l'eau qui constitue un second élément réactionnel. On peut également envisager le dépôt d'une poudre d'une matière réticulable, le traitement ultérieur local ou total consistant en une pulvérisation d'un agent de réticulation. Ces possibilités sont données à titre d'exemple et ne sont pas limitatives.

La technique envisagée permet simultanément la création d'un décor par application de poudre et la réalisation d'un certain relief fonction de la quantité des différentes poudres appliquées et de la technique de fixation auxquelles elles seront soumises. Dans la mesure où la technique de fixation utilisée est une fusion de poudres, il faudra tenir compte d'un effet de modification et de réduction du relief, ainsi que des effets de bord (contraction ou étalement suivant les caractéristiques de la poudre.

La superposition locale de plusieurs poudres permet d'obtenir des effets de relief et d'état de surface, mais aussi des effets particuliers dans l'intensité, la teinte, la profondeur, la brillance, et/ou l'irisation des couleurs.

Selon une première variante de la présente invention, le moyen d'application des poudres consiste en un cadre sérigraphique comportant des mailles distribuées selon un décor désiré, à travers desquelles les poudres sont réparties sur le support.

Selon un procédé continu, ce cadre prend la forme d'un cylindre tournant, normalement synchronisé au défilement du support, et alimenté

4

uniformément sur toute la longueur, en poudre par une trémie intérieure dont les deux lèvres (râcles) frottent sur la face intérieure du cylindre. Le réglage de l'écartement de ces lèvres permet de faire varier le débit de poudre en fonction de la vitesse de rotation du cylindre, de la dimension et de la forme des mailles, et de la fluidité de la poudre.

De plus, les effets décoratifs particuliers peuvent être obtenus par la technique de l'invention, en utilisant des poudres de propriétés différentes. Ces propriétés différentes peuvent être le point de fusion, la viscosité à chaud, la mouillabilité ou d'autres caractéristiques physiques (diffusion et/ou solubilité) ou chimiques.

On peut avantageusement obtenir des effets décoratifs particuliers, en incluant dans les poudres des matières créant une hétérogénéité dans le revêtement , notamment des matières minérales broyées, comme une poudre de terre cuite, des produits de granulométrie assez grossière (technique dit inlaid), etc....

La technique de l'invention est compatible avec les techniques connues pour la préparation, la production et la finition des revêtements divers  utilisés dans le bâtiment, en particulier pour la réalisation du décor. C'est ainsi que le décor réalisé par la technique de l'invention peut être parfait par un autre décor ou venir compléter un autre décor, et que le produit fini peut recevoir un vernis transparent, coloré ou non, etc.... Les techniques connues de réalisation de reliefs par gaufrage ou expansion différentielle de mousse peuvent être également combinées avec la technique de l'invention.

Lorsque la ou les poudres ont été appliquées sur le support, la   fixation peut comporter un traitement thermique provoquant la fusion de la totalité  ou d'une partie de la poudre appliquée, tout en conservant le décor. Le chauffage par les techniques classiques appliquées aux céramiques ou aux émaux peut être utilisé.

Par un choix des poudres utilisées, on peut obtenir des effets de matité particuliers.

Ainsi par exemple, une poudre fusible peut être lissée
lors de la fusion et procurer un état de surface brillant alors qu'une
poudre peu fusible peut être déposée à d'autres endroits pour créer des
effets de contraste de brillance.

De manière analogue, on peut intégrer un agent gonflant dans la
poudre en vue d'obtenir un dépôt mousseux et des effets de relief accentués localement.

On peut obtenir certains effets en soumettant le support avec
ses dépôts avant fixation thermique à des perturbations contrôlées
d'origine mécanique, pneumatique, électrique ou autre (vibrations,
soufflage d'air ou champ électrique) ou éléments photosensibles (lumière
visible, IR ou UV).

La présence invention offre de nombreuses possibilités et n'est
certes pas limitée aux exemples décrits précédemment ou dans la suite du
mémoire descriptif mais couvre toutes variantes entrant dans le cadre de
l'invention.

La présente invention sera décrite plus en détail, à titre
d'illustration, par un exemple de mise en oeuvre, en référence aux exemples
suivants et aux dessins annexés dans lesquels :

- la figure 1 représente une vue schématique d'une installation de fabrication
destinée à la mise en oeuvre en continu du procédé de l'invention ;

- la figure 2 représente une vue en coupe partielle d'un cylindre sérigraphique
travaillant hors contact ;

- la figure 3 est une vue en coupe transversale du cylindre de la figure 2 et,

- la figure 4 est une représentation schématique d'une coupe dans un produit
décoré obtenu suivant le procédé de l'invention.

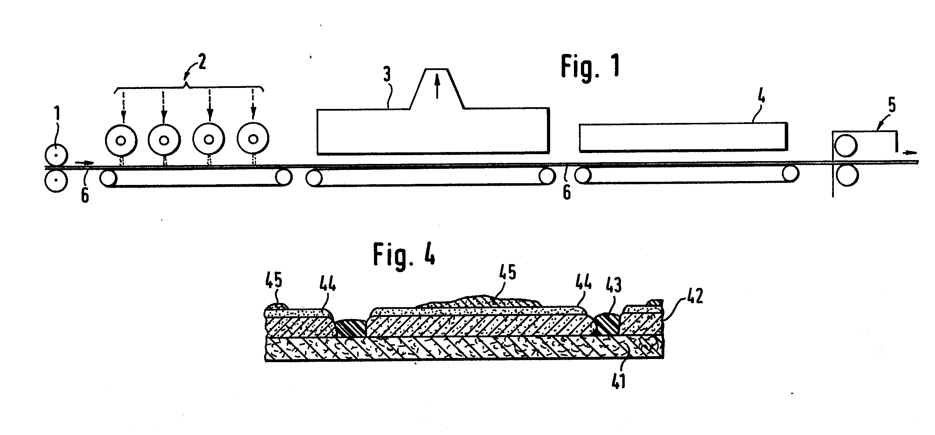

En référence à la figure 1, une installation de fabrication destinée
à la mise en oeuvre en continu du procédé de l'invention comporte, à titre
d'exemple, un dispositif d'alimentation de l'installation. Il peut s'agir

6

aussi bien d'une bande continue d'un support adéquat à incorporer au produit fini qu'une bande transporteuse supportant des éléments individuels à décorer, par exemple des plaques, judicieusement espacées et disposées sur la bande transporteuse pour être pourvues d'un décor lors du passage sous les moyens d'application de poudre 2. Dans le cas où ces poudres sont, au moins partiellement, fusibles, on peut prévoir, après le moyen d'application de poudre 2, un four destiné au traitement thermique 3, une zone de refroidissement 4 et un dispositif de finition et d'enroulage des produits 5.

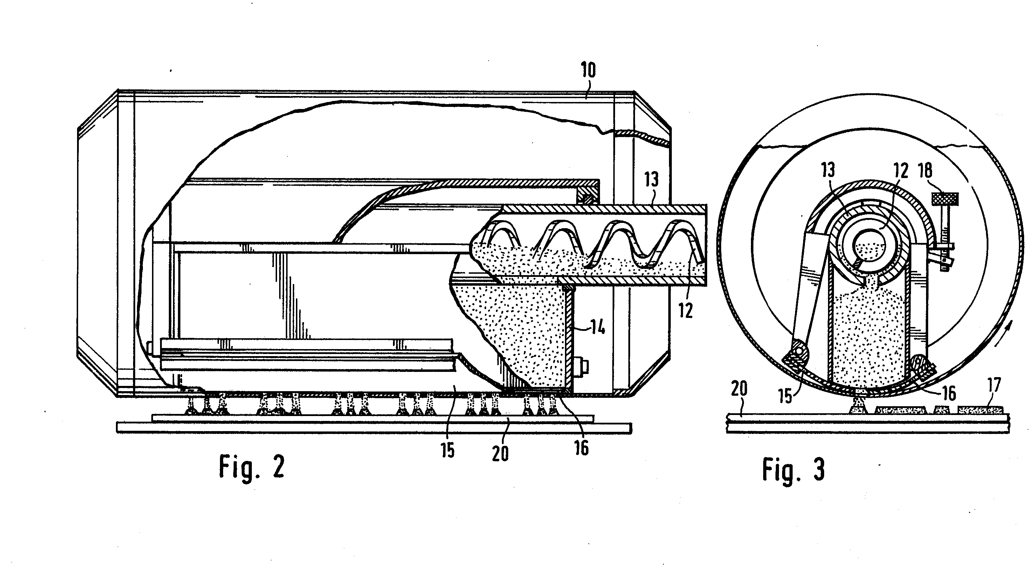

Suivant la présente invention, le moyen d'application de poudres 2 comporte au moins un cylindre du genre de celui qui est représenté aux figures 2 et 3. Dans le présent exemple, il comporte quatre cylindres d'application de poudres, le nombre de cylindres n'étant pas limité.

Le four 3 destiné au traitement thermique, dans l'exemple choisi une fusion des poudres, peut être un four à air chaud classique, à infrarouges ou à micro-ondes ou une combinaison de ces différents types. La zone de refroidissement peut consister en un simple passage à l'air libre du support revêtu des poudres fixées dans le four. Le refroidissement peut être accéléré et amélioré par un courant d'air refroidi, des échangeurs à eau ou tout autre moyen adéquat.

Comme on le constate, la chaine de production décrite dans cet exemple d'application comporte quatre cylindres d'application de poudre successifs, sans fixation intermédiaire. Le procédé n'est cependant pas limité à ce type d'application et on peut prévoir un plus grand nombre de cylindres ainsi que différents traitements intermédiaires. La fixation peut notamment se réaliser par d'autres techniques que le traitement thermique.

Dans le cas d'application donné, les quatre cylindres sont animés d'une même vitesse circonférentielle, celle-ci ayant la même valeur que la vitesse linéaire de défilement du support. On pourrait également travailler à une vitesse circonférentielle des cylindres différente de la vitesse linéaire de défilement du support pour obtenir des effets décoratifs particuliers.

Les figures 2 et 3 montrent un cylindre destiné à l'application des poudres, couramment appelé cadre. Il est constitué d'un tamis sérigraphique à mailles, 10, alimenté par un dispositif de distribution uniforme, par exemple une vis 12 tournant dans un conduit d'alimentation 13 qui distribue la poudre uniformément dans une trémie 14 intérieure au cylindre. Les deux lèvres longitudinales 15 et 16 de cette trémie écartée d'une distance variable, pour régler le débit de poudre qui passe à travers le cadre 10 en fonction de la vitesse de rotation de celui-ci de la fluidité de la poudre et de la taille des mailles en vue de constituer des dépôts localisés 17 sur le support 20.

Le réglage de l'écartement des lèvres peut être effectué au moyen d'une vis 18.

Suivant un mode d'exécution de l'invention un cadre peut comporter des mailles de formes et de dimensions et/ou de densités différentes suivant le motif désiré. De cette manière, le débit de la poudre sera localement plus ou moins important selon les mailles et donc des différences d'intensité des couleurs  et/ou le relief du décor pourront être obtenus ainsi.

L'installation de fabrication décrite est destinée à un procédé continu. Cependant, dans le cas d'un procédé discontinu, on peut prévoir un cadre sérigraphique (cadre) plan sur lequel coulisse une trémie dont les lèvres (râcles) sont écartées d'une distance réglable.

8

Revendications
=================================

1. Procédé de fabrication de revêtements décoratifs sur un support, caractérisé en ce qu'on dépose sur un support, selon un motif ou décor, au moins une poudre sans qu'il y ait contact entre le moyen d'application de la poudre et le support, au moins l'une des poudres déposées subissant une fixation par tout moyen approprié.

2. Procédé selon la revendication 1, caractérisé en ce que plusieurs poudres différentes, en particulier des poudres de granulométrie ou de coloration différentes, sont successivement appliquées en des dépôts redondant contrôlées sans opération de séchage ou de fixation intermédiaire.

3. Procédé selon la revendication 1 ou 2, caractérisé en ce que la fixation finale des produits est effectuée par voie thermique.

4. Procédé selon la revendication 1 ou 2, caractérisé en ce que la fixation finale est effectuée par voie chimique.

5. Procédé selon la revendication 4, caractérisé en ce que la poudre pouvant réagir par fixation chimique, est un ciment se transformant par réaction chimique en présence d'eau.

6. Procédé selon l'une quelconque des revendications 1à 5, caractérisé en ce que le support utilisé est inerte ou réactionnel.

7. Procédé selon la revendication 6, caractérisé en ce que, dans le cas où la poudre utilisée est un ciment, on dépose celui-ci sur un support quelconque humidifié.

8. Procédé selon la revendication 7, caractérisé en ce que le support est un support amiante ou amiante-ciment qui est décoré avec des poudres de ciment diversement colorées.

9

9. Procédé selon l'une quelconque des revendications 1 à 7 caractérisé en ce qu'après avoir déposé la ou les poudres selon un décor, on fixe celui-ci par une opération chimique en appliquant, notamment par pulvérisation, un ou plusieurs réactifs sur la surface totale ou partielle du support décoré.

10. Procédé seolon l'une quelconque des revendications 1 à 4, caractérisé en ce qu'on dépose une poudre d'une matière réticulable, le traitement ultérieur local ou total consistant en une pulvérisation d'un agent de réticulation.

11. Procédé selon l'une quelconque des revendications 1 à 10, caractérisé par la création d'un décor par application de poudre et la réalisation d'un certain relief fonction de la quantité des différentes poudres appliquées et de la technique de fixation auxquelles elles seront soumises.

12. Procédé selon l'une quelconque des revendications précédentes, caractérisé en ce que le moyen d'application des poudres consiste, dans le cas d'un procédé en discontinu, en un cadre sérigraphique comportant des mailles distribuées selon un décor désiré , sur lequel se déplace une trémie de poudre dont les deux lèvres à ouverture réglable raclent la surface dudit cadre.

13. Procédé selon l'une des revendications 1 à 11, caractérisé en ce que le moyen d'application des poudres consiste dans le cas d'un procédé en continu, en un cylindre sérigraphique (10) alimenté par un dispositif de distribution uniforme de la poudre dans une trémie (14) intérieure au cylindre, dont les deux lèvres longitudinales (15,16) sont écartées d'une distance réglable et raclent la surface intérieure du tamis (10).

14. Procédé selon l'une quelconque des revendications précédentes caractérisé en ce qu'on inclut dans les poudres des matières créant une hétérogénéité telles que des matières minérales broyées ou grossières.

15. Procédé selon l'une quelconque des revendications précédentes caractérisé en ce qu'on soumet le support avec ses dépôts avant fixation thermique à des perturbations contrôlées d'origine mécanique, pneumatique électrique ou autres.

16. Installation de fabrication pour la mise en oeuvre du procédé selon l'une quelconque des revendications précédentes, comportant au moins un dispositif d'alimentation (1), une station (3) pour le traitement de fixation, une zone de refroidissement éventuelle (4) et un dispositif de réception (5), caractérisée en ce qu'elle comporte un moyen d'application de poudres (2) sans contact avec le support (6).

17. Installation de production suivant la revendication 16, caractérisée en ce que le moyen d'application de poudre consiste en au moins un cylindre dont la paroi est constituée par un cadre sérigraphique (10) alimenté par un dispositif de distribution uniforme de la poudre dans une trémie (14) intérieure au cylindre (10) dont les deux lèvres longitudinales (15,16) sont écartées d'une distance réglable et raclent la surface intérieure du tamis (10).

18. Installation de production selon la revendication 17, caractérisée en ce que le cadre sérigraphique (10) est alimenté au moyen d'une vis (12) tournant dans un conduit d'alimentation (13) qui distribue la poudre uniformément dans la trémie (14).

19. Installation de production suivant la revendication 17 ou 18, caractérisée en ce que le moyen d'application de poudre consiste en des cylindres tournant à même vitesse circonférentielle, celle-ci ayant la même valeur que la vitesse linéaire de défilement du support.

11

20. Installation de production suivant la revendication 17 ou 18, caractérisée en ce que le moyen d'application de poudre consiste en des cylindres tournant à vitesse circonférentielle différente de la vitesse de défilement du support.

21. Produits obtenus par le procédé d'une quelconque des revendications 1 à 15.

**Fig. 1**

**Fig. 4**

Fig. 2

Fig. 3

0130440

Office européen
des brevets

**RAPPORT DE RECHERCHE EUROPEENNE**

Numéro de la demande

EP   84 10 6864

## DOCUMENTS CONSIDERES COMME PERTINENTS

| Catégorie | Citation du document avec indication, en cas de besoin des parties pertinentes | Revendication concernée | CLASSEMENT DE LA DEMANDE (Int. Cl. ³) |
|---|---|---|---|
| Y | DE-A-2 260 788  (BERGHOFER) <br> * Page 3, lignes 3-6 * | 1 | B 05 D   5/06 |
| A | * Page 3, lignes 7-17 * | 6 | |
| A | * Page 3, lignes 18-32; page 4, lignes 1-11 * | 2,3 | |
| | --- | | |
| Y | GB-A-1 087 560  (PERMUTIT COMP. LTD.) <br> * Page 1, lignes 40-57 * | 1 | |
| A | * Page 1, lignes 67-75 * | 3 | |
| | | | DOMAINES TECHNIQUES RECHERCHES (Int. Cl. ³) |
| A | * Page 3, lignes 21-129; page 4, lignes 1,2; figures 3,4 * | 12,13, 17,18 | B 05 D <br> B 44 C <br> B 44 F <br> C 04 B |
| | --- | | |
| A | GB-A-1 292 421  (S.E. SMITH) <br> * Page 1, lignes 66-88; page 2, lignes 42-74; page 3, lignes 1-5 * | 1 | |
| | ---          -/- | | |

Le présent rapport de recherche a été établi pour toutes les revendications

| Lieu de la recherche <br> LA HAYE | Date d'achèvement de la recherche <br> 02-10-1984 | Examinateur <br> VAN THIELEN J.B. |
|---|---|---|

# 0130440

Office européen
des brevets

**RAPPORT DE RECHERCHE EUROPEENNE**

Numéro de la demande

EP 84 10 6864

| **DOCUMENTS CONSIDERES COMME PERTINENTS** | | | Page 2 | |
|---|---|---|---|---|
| Catégorie | Citation du document avec indication, en cas de besoin des parties pertinentes | Revendication concernée | **CLASSEMENT DE LA DEMANDE (Int. Cl. ³)** | |
| A | FR-A-2 291 868 (BERTRAND ET CHATILLON) * Page 3, lignes 13-40; page 4, lignes 1-9; figure 1 * | 1 | | |
| A | * Page 5, lignes 24-37 * --- | 18 | | |
| A | FR-A-2 210 149 (BERTRAND ET CHATILLON) ----- | | | |
| | | | **DOMAINES TECHNIQUES RECHERCHES (Int. Cl. ³)** | |

Le présent rapport de recherche a été établi pour toutes les revendications

| Lieu de la recherche | Date d'achèvement de la recherche | Examinateur |
|---|---|---|
| LA HAYE | 02-10-1984 | VAN THIELEN J.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82